(19) **Europäisches Patentamt / European Patent Office / Office européen des brevets**

(11) **EP 3 951 991 B1**

(12) **EUROPEAN PATENT SPECIFICATION**

(45) Date of publication and mention
of the grant of the patent:
**15.02.2023 Bulletin 2023/07**

(21) Application number: **20850726.9**

(22) Date of filing: **31.07.2020**

(51) International Patent Classification (IPC):
*H01M 10/0569* $^{(2010.01)}$   *H01M 10/0568* $^{(2010.01)}$
*H01M 4/36* $^{(1974.07)}$   *H01M 4/38* $^{(1974.07)}$
*H01M 4/48* $^{(1974.07)}$   *H01M 4/587* $^{(2010.01)}$
*H01M 10/052* $^{(2010.01)}$   *H01M 10/0525* $^{(2010.01)}$

(52) Cooperative Patent Classification (CPC):
**H01M 4/386; H01M 4/133; H01M 4/134;
H01M 4/362; H01M 4/48; H01M 4/587;
H01M 4/625; H01M 10/052; H01M 10/0525;
H01M 10/0568; H01M 10/0569;** H01M 2300/0022;
H01M 2300/0034; H01M 2300/0037; Y02E 60/10

(86) International application number:
**PCT/KR2020/010117**

(87) International publication number:
**WO 2021/025382 (11.02.2021 Gazette 2021/06)**

(54) **LITHIUM SECONDARY BATTERY HAVING IMPROVED CYCLE CHARACTERISTICS**

LITHIUMSEKUNDÄRBATTERIE MIT VERBESSERTEN ZYKLUSEIGENSCHAFTEN

BATTERIE SECONDAIRE AU LITHIUM PRÉSENTANT DES CARACTÉRISTIQUES DE CYCLE AMÉLIORÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2019 KR 20190094377**

(43) Date of publication of application:
**09.02.2022 Bulletin 2022/06**

(73) Proprietor: **LG Energy Solution, Ltd.
Seoul 07335 (KR)**

(72) Inventors:
• **KIM, Hyun Seung
Daejeon 34122 (KR)**
• **LEE, Chul Haeng
Daejeon 34122 (KR)**
• **OH, Jeong Woo
Daejeon 34122 (KR)**

(74) Representative: **Hoffmann Eitle
Patent- und Rechtsanwälte PartmbB
Arabellastraße 30
81925 München (DE)**

(56) References cited:
**KR-A- 20100 085 950     KR-A- 20160 029 457
KR-A- 20160 081 110     KR-B1- 100 814 843
KR-B1- 101 810 758     KR-B1- 101 810 758**

**Description**

## TECHNICAL FIELD

### Cross-reference to Related Applications

The present application claims priority from Korean Patent Application No. 10-2019-0094377, filed on August 2, 2019.

### Technical Field

The present invention relates to a lithium secondary battery having improved cycle characteristics.

## BACKGROUND ART

An interest in technology based on secondary batteries capable of efficiently storing and utilizing electrical energy has emerged as personal IT devices and computer networks are developed with the development of information society and the accompanying dependency of society as a whole on the electrical energy is increased.

Particularly, in line with significant advances in portable electronic devices, communication devices, or electric vehicles, there is an increasing demand for secondary batteries having high capacity and high energy density while securing long lifetime, miniaturization, and weight reduction of the devices and economic efficiency.

As a solution to this demand, development of techniques to use silicon (Si) or a silicon-based compound with a theoretical maximum capacity of 4,020 mAh/g, instead of graphite (theoretical capacity: 372 mAh/g), as a new highcapacity negative electrode active material has emerged.

However, if the silicon (Si)-based material is used alone as the negative electrode active material, since large volume expansion and contraction occur due to a reaction with lithium during charge and discharge, there is a disadvantage in that silicon-based active material powder is finely powdered and an electrical short circuit between the silicon-based active material powder and a current collector according to charge and discharge occurs. As a result, while battery capacity is rapidly decreased and cycle life is reduced as charge and discharge cycles of the battery proceed, a practical level is not reached.

Particularly, lifetime of the battery may be severely degraded as physical destruction of a solid electrolyte interphase (SEI), as a decomposition product formed on a surface of the silicon-based active material, also occurs due to the large volume change of the active material and continuous decomposition of an electrolyte and the resulting increase in contact resistance between active material particles are intensified.

Thus, in order to use the silicon-based active material as a negative electrode, studies on an electrolyte, which may prevent the above-described degradation behavior and may simultaneously suppress the increase in the contact resistance between the active material particles by controlling the destruction of the SEI, are being reviewed.

## DISCLOSURE OF THE INVENTION

## TECHNICAL PROBLEM

An aspect of the present invention provides a lithium secondary battery in which cycle characteristics are improved by including a negative electrode containing a silicon-based compound, and a non-aqueous electrolyte solution which contains an organic solvent composed of a fluorine-based cyclic carbonate organic solvent and a fluorine-based linear carbonate organic solvent, as a non-aqueous solvent, and a combination of two specific materials as a lithium salt.

## TECHNICAL SOLUTION

According to an aspect of the present invention, there is provided a lithium secondary battery including:

a positive electrode;
a negative electrode including a carbon-based material and a silicon-based compound;
a non-aqueous electrolyte solution containing $LiPF_6$, $LiN(FSO_2)_2$, and a non-aqueous organic solvent; and
a separator,
wherein a fluorine-based cyclic carbonate organic solvent and a fluorine-based linear carbonate organic solvent are included as the non-aqueous organic solvent.

## ADVANTAGEOUS EFFECTS

According to the present invention, since a robust solid electrolyte interphase (SEI) capable of suppressing physical destruction is formed on a surface of a negative electrode by using an non-aqueous electrolyte solution, which contains two types of lithium salts containing a fluorine component and a fluorine-based carbonate organic solvent, during the preparation of a secondary battery which includes the negative electrode including a silicon-based compound, a lithium secondary battery having improved cycle characteristics even after charge and discharge may be prepared.

## BRIEF DESCRIPTION OF THE DRAWINGS

FIG. 1 is a graph illustrating the results of evaluating capacity retentions of lithium secondary batteries according to Experimental Example 1 of the present invention;
FIG. 2 is a graph illustrating the results of evaluating capacity retentions of lithium secondary batteries according to Experimental Example 2 of the present invention;
FIG. 3 is a graph illustrating the results of evaluating resistance increase rates of lithium secondary batteries according to Experimental Example 3 of the present invention;
FIG. 4 is a graph measuring differential capacity against voltage in a $200^{th}$ cycle according to Experimental Example 4 of the present invention;
FIG. 5 is a graph illustrating quasi-open-circuit voltages (QOCVs) measured after performing 200 cycles at room temperature, charging and discharging for one cycle at 0.05 C, and then resting for 1 hr.; and
FIG. 6 is a graph illustrating the results of evaluating capacity retentions of lithium secondary batteries according to Experimental Example 6 of the present invention.

## MODE FOR CARRYING OUT THE INVENTION

Hereinafter, the present invention will be described in more detail.
It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Lithium Secondary Battery

According to the present specification, there is provided a lithium secondary battery in which a negative electrode including a silicon-based compound and a non-aqueous electrolyte solution, which contains two types of lithium salts containing a fluorine component and an organic solvent containing a fluorine component, are used together.
Specifically, in the present specification, there is provided a lithium secondary battery including:

a positive electrode,
a negative electrode including a carbon-based material and a silicon-based compound,
a non-aqueous electrolyte solution containing $LiPF_6$, $LiN(FSO_2)_2$, and a non-aqueous organic solvent, and
a separator,
wherein a fluorine-based cyclic carbonate organic solvent and a fluorine-based linear carbonate organic solvent are included as the non-aqueous organic solvent.

The lithium secondary battery of the present invention may be prepared according to a typical method known in the art, in which, after an electrode assembly, in which a positive electrode, a negative electrode, and a separator disposed between the positive electrode and the negative electrode are sequentially stacked, is formed and accommodated in a battery case, a non-aqueous electrolyte solution is injected thereinto, and used, and, specifically, each configuration is the same as described below.

### (1) Positive Electrode

The positive electrode may be prepared by coating a positive electrode collector with a positive electrode slurry including a positive electrode active material, a binder, a conductive agent, and a solvent, and then drying and rolling the coated positive electrode collector.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. Specifically, the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-iron-phosphate-based oxide (e.g., $LiFePO_4$), lithium-nickel-manganese-based oxide (e.g., $LiNi_{1-Y}Mn_YO_2$ (where $0<Y<1$), $LiMn_{2-z}Ni_zO_4$ (where $0<Z<2$)), lithium-nickel-cobalt-based oxide (e.g., $LiNi_{1-Y1}Co_{Y1}O_2$ (where $0<Y1<1$)), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$)), lithium-nickel-manganese-cobalt-based oxide (e.g., $Li(Ni_pCo_qMn_{r1})O_2$ (where $0<p<1$, $0<q<1$, $0<r1<1$, and $p+q+r1=1$) or $Li(Ni_{p1}Co_{q1}Mn_{r2})O_4$ (where $0<p1<2$, $0<q1<2$, $0<r2<2$, and $p1+q1+r2=2$)), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein $0<p2<1$, $0<q2<1$, $0<r3<1$, $0<S2<1$, and $p2+q2+r3+S2=1$), and any one thereof or a compound of two or more thereof may be included. Among these materials, in terms of the improvement of capacity characteristics and stability of the battery, the lithium composite metal oxide may include $LiCoO_2$, $LiMnO_2$, $LiNiO_2$, lithium nickel manganese cobalt oxide (e.g., $Li(Ni_{0.6}Mn_{0.2}Co_{0.2})O_2$, $Li(Ni_{0.5}Mn_{0.3}Co_{0.2})O_2$, or $Li(Ni_{0.8}Mn_{0.1}Co_{0.1})O_2$), or lithium nickel cobalt aluminum oxide (e.g., $LiNi_{0.8}Co_{0.15}Al_{0.05}O_2$, etc.), and, in consideration of a significant improvement effect due to the control of types and content ratios of components constituting the lithium composite metal oxide, the lithium composite metal oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

The positive electrode active material may be included in an amount of 80 wt% to 99 wt%, for example, 90 wt% to 99 wt%, based on a total weight of solid content in the positive electrode slurry. In a case in which the amount of the positive electrode active material is 80 wt% or less, since energy density is reduced, capacity may be reduced.

The binder is a component that assists in the binding between the active material and the conductive agent and in the binding with the current collector, wherein the binder is commonly added in an amount of 1 wt% to 30 wt% based on the total weight of the solid content in the positive electrode slurry. Examples of the binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene termonomer, a styrene-butadiene rubber, a fluoro rubber, various copolymers, and the like.

Also, the conductive agent is a material providing conductivity without causing adverse chemical changes in the battery, wherein it may be added in an amount of 1 wt% to 20 wt% based on the total weight of the solid content in the positive electrode slurry.

As a typical example of the conductive agent, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

Furthermore, the solvent may include an organic solvent, such as N-methyl-2-pyrrolidone (NMP), and may be used in an amount such that desirable viscosity is obtained when the positive electrode active material as well as optionally the binder and the conductive agent are included. For example, the solvent may be included in an amount such that a concentration of the solid content in the slurry including the positive electrode active material as well as optionally the binder and the conductive agent is in a range of 10 wt% to 60 wt%, for example, 20 wt% to 50 wt%.

**(2) Negative Electrode**

The negative electrode may be prepared by coating a negative electrode collector with a negative electrode slurry including a negative electrode active material, a binder, a conductive agent, and a solvent, and then drying and rolling the coated negative electrode collector.

The negative electrode collector generally has a thickness of 3 um to 500 um. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Furthermore, in the present specification, the negative electrode may include a carbon-based material capable of reversibly intercalating/deintercalating lithium ions and a silicon-based compound which may be doped and undoped with lithium.

First, as the carbon-based material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used.

Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes. Specifically, the carbon-based negative electrode active material may use natural graphite or artificial graphite.

Also, the silicon-based compound, which may be doped and undoped with lithium, may include at least one selected from silicon (Si), $SiO_x$ ($0<x\leq2$), and a Si-Y alloy (where Y is an element selected from the group consisting of alkali metal, alkaline earth metal, a Group 13 element, a Group 14 element excluding Si, transition metal, a rare earth element, and a combination thereof). Furthermore, a mixture of $SiO_2$ and at least one thereof may also be used. The element Y may be selected from the group consisting of Mg, calcium (Ca), strontium (Sr), barium (Ba), radium (Ra), scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and a combination thereof. Specifically, $SiO_x$ ($0<x\leq2$) may be used as the silicon-based compound.

A weight ratio of the carbon-based material to the silicon-based compound may be in a range of 1:1 to 1:10, for example, 1:1 to 1:8.

In a case in which the mixing ratio of the carbon-based material to the silicon-based compound satisfies the above range, high capacity and high energy density of the secondary battery may be secured. If, the carbon-based material is included in an excessive amount, greater than the above weight ratio range, the energy density of the battery may be reduced, and, if the silicon-based compound is included in an excessive amount, greater than the above weight ratio range, durability of the battery may be reduced.

In addition to the carbon-based material capable of reversibly intercalating/deintercalating lithium ions and the silicon-based compound which may be doped and undoped with lithium, the negative electrode active material may include at least one selected from the group consisting of lithium metal, metal or an alloy of lithium and the metal, a metal composite oxide, and a transition metal oxide, if necessary.

As the metal or the alloy of lithium and the metal, a metal selected from the group consisting of Cu, nickel (Ni), sodium (Na), potassium (K), Rb, cesium (Cs), francium (Fr), beryllium (Be), Mg, Ca, Sr, Si, Sb, Pb, In, Zn, Ba, Ra, Ge, Al, and Sn, or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0\leq x\leq1$), $Li_xWO_2$ ($0\leq x\leq1$), and $Sn_xMe_{1-x}Me'_yO_z$ (Me: manganese (Mn), Fe, Pb, or Ge; Me': Al, boron (B), phosphorus (P), Si, Groups I, II and III elements of the periodic table, or halogen; $0<x\leq1$; $1\leq y\leq3$; $1\leq z\leq8$) may be used as the metal composite oxide.

Furthermore, the negative electrode active material may include Sn, $SnO_2$, and Sn-Y1 (where Y1 is an element selected from the group consisting of alkali metal, alkaline earth metal, a Group 13 element, a Group 14 element excluding Sn, transition metal, a rare earth element, and a combination thereof), and the element Y1 may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithiumcontaining titanium composite oxide (LTO), vanadium oxide, and lithium vanadium oxide.

The negative electrode active material may be included in an amount of 80 wt% to 99 wt% based on a total weight of solid content in the negative electrode slurry.

The binder is a component that assists in the binding between the conductive agent, the active material, and the current collector, wherein the binder is commonly added in an amount of 1 wt% to 30 wt% based on the total weight of the solid content in the negative electrode slurry. Examples of the binder may be polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a styrene-butadiene rubber, a fluoro rubber, and various copolymers thereof.

The conductive agent is a component for further improving the conductivity of the negative electrode active material, wherein the conductive agent may be added in an amount of 1 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The solvent may include water or an organic solvent, such as NMP and alcohol, and may be used in an amount such that desirable viscosity is obtained when the negative electrode active material as well as optionally the binder and the conductive agent are included. For example, the solvent may be included in an amount such that a concentration of the solid content in the negative electrode slurry including the negative electrode active material as well as optionally the binder and the conductive agent is in a range of 50 wt% to 75 wt%, for example, 50 wt% to 65 wt%.

### (3) Non-aqueous Electrolyte Solution

Also, in the present specification, the non-aqueous electrolyte solution may contain two types or more of lithium salts containing a fluorine component and an organic solvent containing a fluorine component.

### (3-1) Two Types of Lithium Salts Containing Fluorine

The non-aqueous electrolyte solution of the present invention contains $LiPF_6$ and $LiN(FSO_2)_2$ as a lithium salt. Specifically, the non-aqueous electrolyte solution may not contain another lithium salt other than $LiPF_6$ and $LiN(FSO_2)_2$. That is, the lithium salt of the non-aqueous electrolyte solution may be composed of $LiPF_6$ and $LiN(FSO_2)_2$.

Since $LiPF_6$ is a lithium salt that may have high ionic conductivity by being dissolved excessively in an organic solvent, it has an advantage in terms of output characteristics and initial capacity of the battery when it is used with $LiN(FSO_2)_2$ in comparison to other fluorine-containing lithium salts such as $LiPO_2F_2$ and $LiBF_4$.

Also, a molar concentration (molarity, M) ratio of the $LiPF_6$ to the $LiN(FSO_2)_2$ may be in a range of 1:1 to 1:10, particularly 1:1 to 1:5, and more particularly 1:1 to 1:2.

In this case, if the molarity ratio of the $LiPF_6$ with low water reactivity to the $LiN(FSO_2)_2$ is less than the above range, since the number of lithium ions completely dissociated in the electrolyte solution is reduced to reduce ionic conductivity, it is not easy to secure the output characteristics, and, furthermore, an unstable solid electrolyte interphase (SEI) may be formed on a surface of the negative electrode because the concentration of the $LiPF_6$, which generates hydrofluoric acid by heat, is relatively increased. In contrast, in a case in which the molarity ratio of the $LiPF_6$ to the $LiN(FSO_2)_2$ is greater than the above range, since the concentration of the salt in the electrolyte solution is excessively increased, viscosity of the non-aqueous electrolyte solution is increased, and, accordingly, battery operation becomes unstable or not possible due to a decrease in electrolyte solution wetting of the electrode.

Furthermore, a mixing concentration of the two types of lithium salts containing fluorine may be appropriately changed in a normally usable range, and the two types of lithium salts containing fluorine may be included in a concentration of 0.8 M to 3.0 M, for example, 1.0 M to 3.0 M in the electrolyte solution to obtain an optimum effect of forming a film for preventing corrosion of a surface of the electrode.

If the mixing concentration of the two types of lithium salts is less than 0.8 M, effects of improving low-temperature output of the lithium secondary battery and improving cycle characteristics during high-temperature storage are insignificant, and, if the mixing concentration of the two types of lithium salts is greater than 3.0 M, the electrolyte solution wetting may be reduced due to an increase in the viscosity of the non-aqueous electrolyte solution.

In the present invention, a more robust F-rich SEI may be formed on the surface of the negative electrode including a silicon-based compound by using the non-aqueous electrolyte solution which contains the fluorine-containing lithium salt, instead of a non-fluorine-based lithium salt, and a fluorine element-containing organic solvent to be described later. Thus, additional electrolyte solution decomposition on a surface of the active material may be suppressed by preventing physical destruction of the SEI due to a change in volume of the silicon-based negative active material which occurs during charge and discharge, and, furthermore, a side reaction between the negative electrode and the electrolyte solution may be suppressed. Therefore, an increase in resistance of the battery due to the SEI formed by an additional reaction of the electrolyte solution and the resulting degradation of lifetime may be improved.

### (3-2) Non-aqueous Organic Solvent

Also, in the present specification, the non-aqueous electrolyte solution contains a fluorine-based carbonate solvent as a main non-aqueous solvent, and it is desirable that the non-aqueous electrolyte solution does not contain a non-fluorine-based carbonate-based solvent. That is, the non-aqueous organic solvent may consist of a fluorine-based cyclic carbonate organic solvent and a fluorine-based linear carbonate organic solvent.

Currently, most secondary batteries use a non-fluorine-based carbonate solvent as a main solvent of a non-aqueous electrolyte solution, wherein the solvent may generally be decomposed at high voltage to generate a gas and may be precipitated as a film to increase resistance of the battery. Particularly, in a case in which a battery containing an excessive amount of silicon is used, since operating potential of silicon is higher than that of graphite when charge and discharge are performed under the same voltage limit condition, actual charging potential of the positive electrode is increased, and, as a result, a side reaction of the non-fluorine-based electrolyte solution is increased. Thus, the present invention is characterized in that a fluorine-based solvent with excellent electrochemical stability, instead of the non-fluorine-based carbonate solvent with low oxidation stability, is included as a main solvent of the non-aqueous electrolyte solution. That is, since the fluorine-based solvent has high oxidation stability, a robust SEI may be formed on the surface of the electrode, and thus, the fluorine-based solvent may prevent a side reaction between the non-aqueous electrolyte solution and the electrode, particularly, the positive electrode during operation (charge and discharge) at a high voltage and may particularly improve cycle characteristics of the secondary battery in which the negative electrode including the silicon-based compound is included.

The fluorine-based carbonate solvent may include a fluorine-based cyclic carbonate organic solvent and a fluorine-based linear carbonate organic solvent.

The fluorine-based cyclic carbonate organic solvent may include at least one selected from the group consisting of fluoroethylene carbonate (FEC), difluoroethylene carbonate (DFEC), trifluoroethylene carbonate, tetrafluoroethylene carbonate, 3,3,3-trifluoropropylene carbonate, and 1-fluoropropylene carbonate, and, specifically, may include fluoroethylene carbonate.

Also, the fluorine-based linear carbonate organic solvent may include at least one selected from the group consisting of fluoroethyl methyl carbonate (FEMC), fluorodimethyl carbonate (F-DMC), di(2,2,2-trifluoroethyl)carbonate, 2,2,2-trifluoroethyl methyl carbonate, difluoromethyl methyl carbonate, trifluoromethyl methyl carbonate, difluoromethyl ethyl carbonate, 1-fluoroethyl methyl carbonate, and methyl 2,2,2-trifluoroethyl carbonate (F3-EMC), and may specifically include fluoroethyl methyl carbonate (FEMC).

Furthermore, a volume ratio of the fluorine-based cyclic carbonate organic solvent to the fluorine-based linear carbonate organic solvent may be in a range of 0.5:9.5 to 4:6, particularly 1:9 to 4:6, and more particularly 1:9 to 3:7.

That is, in the present invention, in order to secure high ionic conductivity of the lithium secondary battery and reduction stability at the negative electrode, a dielectric constant of the non-aqueous electrolyte solution is increased by using the fluorine-based cyclic carbonate organic solvent and the fluorine-based linear carbonate organic solvent together, as a main solvent of the non-aqueous electrolyte solution, within the above-described ratio range, and based on this, a degree of dissociation of the lithium salt may be increased to secure ionic conductivity performance of the electrolyte solution. Also, the cycle characteristics may be improved by forming a robust SEI on the surface of the negative electrode.

In this case, if the fluorine-based cyclic carbonate organic solvent is included in a weight ratio of less than 0.5, that is, the fluorine-based linear carbonate organic solvent is included in a weight ratio of greater than 9.5, since the dielectric constant of the non-aqueous electrolyte solution is decreased, the degree of dissociation of the lithium salt may be reduced. Also, if the weight ratio of the fluorine-based cyclic carbonate organic solvent is greater than 4, since the viscosity of the non-aqueous electrolyte solution becomes high, mobility of lithium ions is reduced and the electrolyte solution wetting is reduced, and thus, the cycle characteristics and capacity characteristics may be degraded.

It is desirable that the non-aqueous electrolyte solution according to the present specification does not contain a non-fluorine-based carbonate-based solvent as the non-aqueous solvent. Specifically, the non-fluorine-based carbonate-based solvent may include a cyclic carbonate-based organic solvent and a linear carbonate-based organic solvent.

The cyclic carbonate-based organic solvent is a highly viscous organic solvent, wherein specific examples of the cyclic carbonate-based organic solvent may be ethylene carbonate (EC), propylene carbonate (PC), 1,2-butylene carbonate, 2,3-butylene carbonate, 1,2-pentylene carbonate, 2,3-pentylene carbonate, or vinylene carbonate.

Also, the linear carbonate-based organic solvent is an organic solvent having low viscosity and low permittivity, wherein typical examples of the linear carbonate-based organic solvent may be dimethyl carbonate (DMC), diethyl carbonate (DEC), dipropyl carbonate, ethylmethyl carbonate (EMC), methylpropyl carbonate, or ethylpropyl carbonate.

Since the non-fluorine-based carbonate-based solvent has low oxidation stability, gas may be generated by the side reaction with the electrode during high-temperature storage or high-voltage operation, and thus, stability of the lithium secondary battery may be reduced. Therefore, it is desirable that the non-fluorine-based carbonate-based solvent is not contained in the non-aqueous electrolyte solution in terms of improving the performance of the secondary battery.

Furthermore, it is also desirable that the non-aqueous electrolyte solution of the present invention does not contain a fluorine-based ester solvent for the same reason.

In the non-aqueous electrolyte solution, a balance excluding $LiPF_6$, $LiN(FSO_2)_2$, and additional additives to be described later may be the non-aqueous organic solvent.

**(4) Additional Additives**

In order to prevent the non-aqueous electrolyte solution from being decomposed to cause collapse of the electrode in a high-voltage environment, or further improve low-temperature high-rate discharge characteristics, high-temperature stability, overcharge protection, and a battery swelling suppression effect at high temperatures, the non-aqueous electrolyte solution included in the lithium secondary battery of the present invention may further include additional additives in the non-aqueous electrolyte solution, if necessary.

Typical examples of the additional additive may be at least one additional additive selected from the group consisting of a cyclic carbonate-based compound, a halogen-substituted carbonate-based compound, a sultone-based compound, a sulfate-based compound, a phosphate-based compound, a borate-based compound, a nitrile-based compound, an amine-based compound, a silane-based compound, a benzene-based compound, and a lithium salt-based compound.

The cyclic carbonate-based compound may include vinylene carbonate (VC) or vinyl ethylene carbonate, and may specifically include vinylene carbonate.

As described above, it is desirable that the non-aqueous electrolyte solution of the present invention does not contain a non-fluorine-based carbonate-based solvent. Thus, in a case in which the cyclic carbonate-based compound is included as the additive, the cyclic carbonate-based compound may be included in an amount of less than 4 wt%, for example, 0.1 wt% to 3 wt% based on a total weight of the non-aqueous electrolyte solution. If, in a case in which the amount of the cyclic carbonate-based compound is greater than 4 wt%, stability of the lithium secondary battery may be reduced.

The halogen-substituted carbonate-based compound may include fluoroethylene carbonate (FEC).

The sultone-based compound is a material capable of forming a stable SEI on the surface of the negative electrode by a reduction reaction, wherein the sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propenesultone, and may specifically include 1,3-propane sultone (PS) or 1,3-propene sultone (PRS).

The sulfate-based compound is a material capable of forming a stable SEI, which does not crack even during high-temperature storage, by being electrically decomposed on the surface of the negative electrode, wherein the sulfate-based compound may include ethylene sulfate (Esa), trimethylene sulfate (TMS), or methyl trimethylene sulfate (MTMS).

The phosphate-based compound may include at least one compound selected from the group consisting of lithium difluorobis(oxalato)phosphate, lithium difluorophosphate, trimethylsilyl phosphate, tris(trimethylsilyl) phosphite, tris(2,2,2-trifluoroethyl)phosphate, and tris(trifluoroethyl)phosphite, and may specifically include at least one selected from the group consisting of lithium difluorobis(oxalato)phosphate and lithium difluorophosphate ($LiPO_2F_2$) which contain a fluorine component.

The borate-based compound may include lithium tetraphenylborate and lithium difluoro(oxalato)borate (LiODFB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, and may specifically include at least one selected from the group consisting of 2-fluorobenzonitrile, 4-fluorobenzonitrile, difluorobenzonitrile, and trifluorobenzonitrile which contain a fluorine component.

The amine-based compound may include triethanolamine or ethylenediamine, and the silane-based compound may include tetravinylsilane.

The benzene-based compound may include monofluorobenzene, difluorobenzene, trifluorobenzene, and tetrafluorobenzene.

The lithium salt-based compound is a compound different from the lithium salt included in the non-aqueous electrolyte solution, wherein the lithium salt-based compound may include at least one compound selected from the group consisting of $LiPO_2F_2$, LiODFB, LiBOB (lithium bis (oxalato) borate ($LiB(C_2O_4)_2$)), and lithium tetrafluoroborate ($LiBF_4$).

The additional additives may be used as a mixture of two or more thereof, and may be included in an amount of less than 50 wt%, particularly 0.1 wt% to 10 wt%, and preferably 0.05 wt% to 5 wt% based on the total weight of the non-aqueous electrolyte solution. If the mixed amount of the additional additives is less than 0.1 wt%, effects of improving low-temperature capacity, high-temperature storage characteristics, and high-temperature life characteristics of the battery are insignificant, and, if the mixed amount of the additional additives is greater than 50 wt%, there is a possibility that the side reaction in the electrolyte solution occurs excessively during charge and discharge of the battery. Particularly, since the additives for forming an SEI may not be sufficiently decomposed at high temperatures when excessive amounts of the additives for forming an SEI are added, the additives for forming an SEI may be present in the form of an unreacted material or precipitates in the electrolyte solution at room temperature. Accordingly, a side reaction may occur in which life or resistance characteristics of the secondary battery are degraded.

**(5) Separator**

A typical porous polymer film generally used, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator included in the lithium secondary battery of the present invention, and a typical porous nonwoven fabric, for example, a nonwoven fabric formed of high melting point glass fibers or polyethylene terephthalate fibers may be used, but the present invention is not limited thereto.

A shape of the lithium secondary battery of the present invention is not particularly limited, but a cylindrical type using a can, a prismatic type, a pouch type, or a coin type may be used.

Hereinafter, the present invention will be described in detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

## Examples

### Example 1.

(Preparation of Non-aqueous Electrolyte Solution for Lithium Secondary Battery)

After fluoroethylene carbonate (FEC) and fluoroethyl methyl carbonate (FEMC) were mixed in a volume ratio of 3:7, a mixed organic solvent was prepared by dissolving 0.5 M $LiPF_6$ and 1.0 M $LiN(FSO_2)_2$ (LiFSI). A non-aqueous electrolyte solution for a lithium secondary battery was prepared by mixing 0.5 g of 1,3-propane sultone (PS) in 99.5 g of the mixed organic solvent.

(Lithium Secondary Battery Preparation)

A positive electrode active material ($LiNi_{0.8}Co_{0.1}Mn_{0.1}O_2$; NCM), a conductive agent (carbon black), and a binder (polyvinylidene fluoride) were added to N-methyl-2-pyrrolidone (NMP) at a weight ratio of 97.5:1:1.5 to prepare a positive electrode slurry (solid content: 50 wt%). A 12 um thick aluminum (Al) thin film, as a positive electrode collector, was coated with the positive electrode slurry, dried, and then roll-pressed to prepare a positive electrode.

A negative electrode active material (graphite:SiO=10:90 weight ratio), a binder (SBR-CMC), and a conductive agent (carbon black) were added in a weight ratio of 95:3.5:1.5 to water, as a solvent, to prepare a negative electrode slurry (solid content: 60 wt%). A 6 um thick copper (Cu) thin film, as a negative electrode collector, was coated with the negative electrode slurry, dried, and then roll-pressed to prepare a negative electrode.

An electrode assembly was prepared by sequentially stacking the positive electrode, a polyolefin-based porous separator coated with inorganic particles ($Al_2O_3$), and the negative electrode.

The electrode assembly was accommodated in a pouch-type battery case, and the non-aqueous electrolyte solution for a lithium secondary battery was injected thereinto to prepare a pouch-type lithium secondary battery.

### Example 2.

(Preparation of Non-aqueous Electrolyte Solution for Lithium Secondary Battery)

After fluoroethylene carbonate (FEC) and fluoroethyl methyl carbonate (FEMC) were mixed in a volume ratio of 3:7, a mixed organic solvent was prepared by dissolving 0.5 M $LiPF_6$ and 1.0 M $LiN(FSO_2)_2$ (LiFSI). A non-aqueous electrolyte solution for a lithium secondary battery was prepared by mixing 0.5 g of 1,3-propane sultone (PS) and 3.0 g of vinylene carbonate in 96.5 g of the mixed organic solvent.

(Lithium Secondary Battery Preparation)

A lithium secondary battery was prepared in the same manner as in Example 1 except that the above-prepared non-aqueous electrolyte solution, instead of the non-aqueous electrolyte solution prepared in Example 1, was used.

**Example 3.**

(Preparation of Non-aqueous Electrolyte Solution for Lithium Secondary Battery)

After fluoroethylene carbonate (FEC) and fluoroethylmethyl carbonate (FEMC) were mixed in a volume ratio of 1:9, a mixed organic solvent was prepared by dissolving 0.5 M LiPF$_6$ and 1.0 M LiN(FSO$_2$)$_2$ (LiFSI). A non-aqueous electrolyte solution for a lithium secondary battery was prepared by mixing 0.5 g of 1,3-propane sultone (PS) and 3.0 g of vinylene carbonate in 96.5 g of the mixed organic solvent.

(Lithium Secondary Battery Preparation)

A lithium secondary battery was prepared in the same manner as in Example 1 except that the above-prepared non-aqueous electrolyte solution, instead of the non-aqueous electrolyte solution prepared in Example 1, was used.

**Comparative Example 1.**

(Preparation of Non-aqueous Electrolyte Solution for Lithium Secondary Battery)

A non-aqueous electrolyte solution for a lithium secondary battery was prepared by mixing 2.0 g of 1,3-propane sultone (PS) in 98 g of a non-aqueous solvent (ethylene carbonate (EC):ethyl methyl carbonate (EMC)=3:7 volume ratio) in which 1.0 M LiPF$_6$ was dissolved.

(Lithium Secondary Battery Preparation)

A lithium secondary battery was prepared in the same manner as in Example 1 except that the above-prepared non-aqueous electrolyte solution, instead of the non-aqueous electrolyte solution prepared in Example 1, was used.

**Comparative Example 2.**

(Preparation of Non-aqueous Electrolyte Solution for Lithium Secondary Battery)

A non-aqueous electrolyte solution for a lithium secondary battery was prepared by mixing 2.0 g of 1,3-propane sultone (PS) in 98 g of a non-aqueous solvent (ethylene carbonate (EC):dimethyl carbonate (DMC)=3:7 volume ratio) in which 1.0 M LiPF$_6$ was dissolved.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Comparative Example 3.**

(Preparation of Non-aqueous Electrolyte Solution for Lithium Secondary Battery)

A non-aqueous electrolyte solution for a lithium secondary battery was prepared by mixing 2.0 g of 1,3-propane sultone (PS) in 98 g of a non-aqueous solvent (fluoroethylene carbonate (FEC):ethyl methyl carbonate (EMC)=3:7 volume ratio) in which 1.0 M LiPF$_6$ was dissolved.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Comparative Example 4.**

(Preparation of Non-aqueous Electrolyte Solution for Lithium Secondary Battery)

A non-aqueous electrolyte solution for a lithium secondary battery was prepared by mixing 2.0 g of 1,3-propane sultone (PS) in 98 g of a non-aqueous solvent (fluoroethylene carbonate (FEC):diethyl carbonate (DEC)=3:7 volume ratio) in which 1.0 M $LiPF_6$ was dissolved.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Comparative Example 5.**

(Preparation of Non-aqueous Electrolyte Solution for Lithium Secondary Battery)

A non-aqueous electrolyte solution for a lithium secondary battery was prepared by mixing 2.0 g of 1,3-propane sultone (PS) in 98 g of a non-aqueous solvent (fluoroethylene carbonate (FEC):fluoroethyl methyl carbonate (FEMC)=3:7 volume ratio) in which 1.0 M $LiPF_6$ was dissolved.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Comparative Example 6.**

(Preparation of Non-aqueous Electrolyte Solution for Lithium Secondary Battery)

After fluoroethylene carbonate (FEC) and diethyl carbonate (DEC) were mixed in a volume ratio of 1:9, a mixed organic solvent was prepared by dissolving 1.5 M $LiPF_6$. A non-aqueous electrolyte solution for a lithium secondary battery was prepared by mixing 0.5 g of 1,3-propane sultone (PS) and 3.0 g of vinylene carbonate in 96.5 g of the mixed organic solvent.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Comparative Example 7.**

(Preparation of Non-aqueous Electrolyte Solution for Lithium Secondary Battery)

After fluoroethylene carbonate (FEC) and diethyl carbonate (DEC) were mixed in a volume ratio of 1:9, a mixed organic solvent was prepared by dissolving 1.5 M $LiPF_6$, 0.2 M $LiPO_2F_2$, and 1.5 M $LiBF_4$. A non-aqueous electrolyte solution for a lithium secondary battery was prepared by mixing 0.5 g of 1,3-propane sultone (PS) and 3.0 g of vinylene carbonate in 96.5 g of the mixed organic solvent.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Comparative Example 8.**

(Preparation of Non-aqueous Electrolyte Solution for Lithium Secondary Battery)

After fluoroethylene carbonate (FEC), propylene carbonate (PC), and diethyl carbonate (DEC) were mixed in a volume ratio of 1:1:8, a mixed organic solvent was prepared by dissolving 1.5 M $LiPF_6$, 0.2 M $LiPO_2F_2$, and 1.5 M $LiBF_4$. A non-aqueous electrolyte solution for a lithium secondary battery was prepared by mixing 0.5 g of 1,3-propane sultone (PS) and 3.0 g of vinylene carbonate in 96.5 g of the mixed organic solvent.

(Lithium Secondary Battery Preparation)

A lithium secondary battery was prepared in the same manner as in Comparative Example 1 except that the above-prepared non-aqueous electrolyte solution, instead of the non-aqueous electrolyte solution prepared in Comparative Example 1, was used.

**Experimental Examples**

**Experimental Example 1. Cycle Characteristics Evaluation**

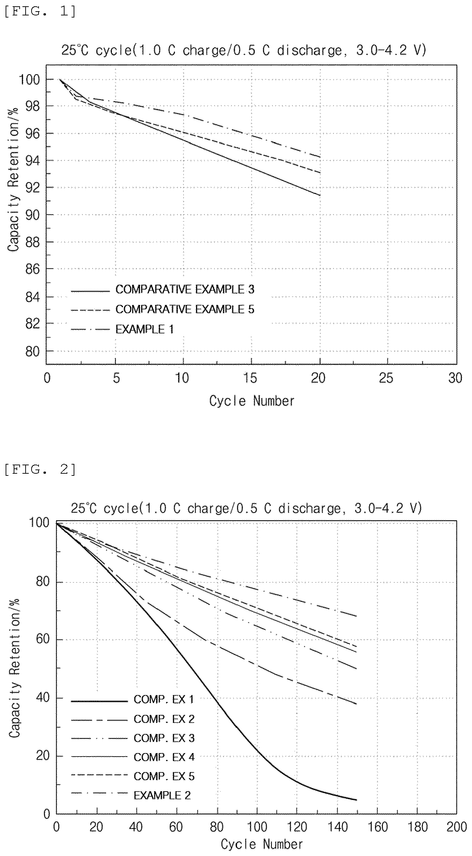

The lithium secondary battery prepared in Example 1 and each of the lithium secondary batteries prepared in Comparative Examples 3 and 5 were charged at 1.0 C rate to 4.20 V under a constant current-constant voltage (CC-CV) condition at 25°C and discharged at 0.5 C rate under a CC condition to 3.0 V. The above charging and discharging were defined as one cycle, and 3 cycles of initial charging and discharging were performed.
Subsequently, each lithium secondary battery initially charged and discharged was charged at 1.0 C rate to 4.2 V under a CC-CV condition and discharged at 0.5 C rate under a CC condition to 3.0 V. The above charging and discharging were defined as one cycle, and 20 cycles were performed at 25°C.
In this case, discharge capacity was measured every 5 cycles, and the measured value was substituted into the following Equation 1 to calculate a capacity retention. The results thereof are presented in FIG. 1 below.

$$[\text{Equation 1}]$$

$$\text{Capacity retention (\%)} = (\text{discharge capacity every 5 cycles/discharge capacity after initial charge and discharge}) \times 100$$

Referring to FIG. 1, it may be understood that capacity retention (%) after 20 cycles of the secondary battery prepared in Example 1 was better than those of the secondary batteries prepared in Comparative Examples 3 and 5.

**Experimental Example 2. Cycle Characteristics Evaluation**

The lithium secondary battery prepared in Example 2 and each of the lithium secondary batteries prepared in Comparative Examples 1 to 5 were charged at 1.0 C rate to 4.20 V under a constant current-constant voltage (CC-CV) condition at 25°C and discharged at 0.5 C rate under a CC condition to 3.0 V. The above charging and discharging were defined as one cycle, and 3 cycles of initial charging and discharging were performed.
Subsequently, each lithium secondary battery initially charged and discharged was charged at 1.0 C rate to 4.2 V under a CC-CV condition and discharged at 0.5 C rate under a CC condition to 3.0 V. The above charging and discharging were defined as one cycle, and 150 cycles were performed at 25°C.
In this case, discharge capacity was measured every 5 cycles, and the measured value was substituted into Equation 1 to calculate a capacity retention. The results thereof are presented in FIG. 2.
Referring to FIG. 2, it may be understood that capacity retention (%) after 150 cycles of the secondary battery prepared in Example 2 was better than those of the secondary batteries prepared in Comparative Examples 1 to 5.

**Experimental Example 3. Resistance Increase Rate Evaluation**

The secondary battery prepared in Example 2 and the secondary battery prepared in Comparative Example 3 were charged at 1.0 C rate to 4.2 V under a CC-CV condition at 25°C and discharged at 0.5 C rate under a CC condition to 3.0 V. The above charging and discharging were defined as one cycle, and 3 cycles of initial charging and discharging were performed. An initial voltage was measured using PNE-0506 charge/discharge equipment (manufacturer: PNE SOLUTION Co., Ltd., 5 V, 6 A)), and a resistance value was calculated therefrom.

Subsequently, each lithium secondary battery initially charged and discharged was charged at 1.0 C rate to 4.2 V under a CC-CV condition and discharged at 0.5 C rate under a CC condition to 3.0 V. The above charging and discharging were defined as one cycle, and 200 cycles were performed.

Then, after 200 cycles, a voltage was measured using PNE-0506 charge/discharge equipment (manufacturer: PNE SOLUTION Co., Ltd., 5 V, 6 A)), and a resistance value was calculated from the voltage obtained.

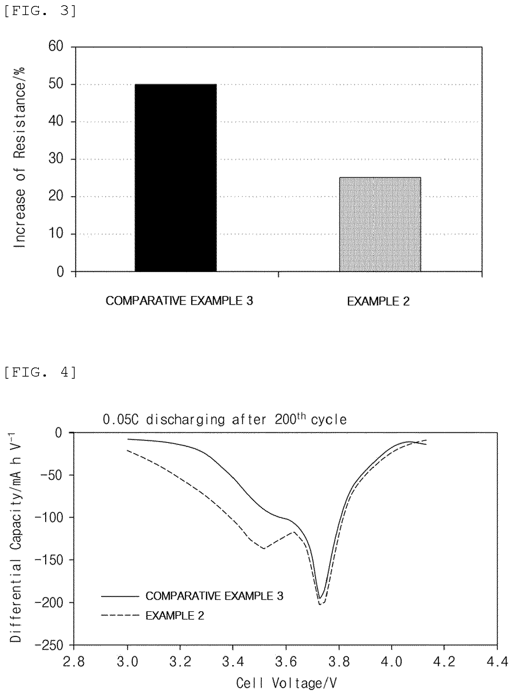

The measured initial resistance value and the resistance value after 200 cycles were substituted into the following Equation (2) to calculate a resistance increase rate, and the results thereof are presented in FIG. 3.

$$[Equation\ 2]$$

$$Resistance\ increase\ rate\ (\%) = [(resistance\ value\ after\ 200\ cycles/resistance\ value\ after\ initial\ charge\ and\ discharge) \times 100] - 100$$

Referring to FIG. 3, it may be understood that a resistance increase rate (%) after 200 cycles of the secondary battery of Comparative Example 3 was 50%, but a resistance increase rate (%) after 200 cycles of the lithium secondary battery prepared in Example 2 was improved to 25%.

That is, since the secondary battery of Example 2 did not include a non-fluorine-based organic solvent as the non-aqueous solvent in the non-aqueous electrolyte solution, an additional electrolyte decomposition reaction was reduced during charge and discharge, and thus, it may be understood that an increase in resistance was suppressed.

**Experimental Example 4. Differential Capacity Evaluation**

Each of the secondary battery prepared in Example 2 and the secondary battery prepared in Comparative Example 3 was charged at 1.0 C rate to 4.2 V under a CC-CV condition at room temperature (25°C) and discharged at 0.5 C rate under a CC condition to 3.0 V. After the above charging and discharging were defined as one cycle and 200 cycles were performed, each secondary battery was charged at a rate (Crate) of 0.05 C to a state of charge (SOC) of 100% and then re-discharged to obtain a differential capacity curve, and the results thereof are presented in FIG. 4.

The expression "differential capacity curve" denotes a graph showing a relationship between voltage and differential capacity (dQ/dV) obtained by differentiating charge/discharge capacity by voltage, wherein a decrease in peak of the voltage curve means that a charge and discharge reaction in the corresponding voltage region is reduced to reduce the discharge capacity obtained.

Referring to FIG. 4, the lithium secondary battery prepared according to Example 2 exhibited high discharge capacity by silicon near a voltage of 3.5 V during low-rate discharge, but, with respect to the lithium secondary battery of Comparative Example 3, since capacity obtained at a voltage of 3.5 V was lost, it may be confirmed that it was not possible to obtain capacity.

Thus, with respect to the lithium secondary battery of Example 2, since an excellent SEI was formed, an electrolyte decomposition reaction was relatively reduced and, accordingly, loss of lithium (Li) and an electrical short circuit between active material particles, which occurred in repeated charge/discharge cycles, were suppressed, and thus, it may be understood that discharge reversibility was significantly improved in comparison to that of Comparative Example 3.

**Experimental Example 5. QOCV Evaluation**

Charging and discharging, in which the secondary battery prepared in Example 2 and the secondary battery prepared in Comparative Example 3 were charged at 1.0 C rate to 4.2 V under a CC-CV condition at 25°C and discharged at 0.5 C rate under a CC condition to 3.0 V, were defined as one cycle, and 200 cycles of charging and discharging were performed.

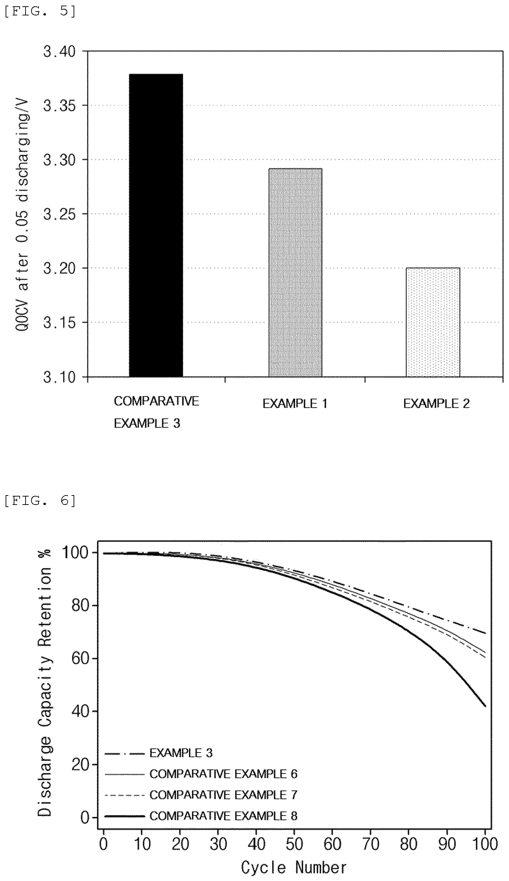

Subsequently, after each secondary battery was discharged at 0.05 C and rest for 1 hour, a quasi-open-circuit voltage (Q-OCV) was measured for each secondary battery at 25°C, and the results thereof are presented in FIG. 5.

In this case, when a QOCV value was high in a graph, it means that discharge did not occur normally because Li ions were trapped in the negative electrode. In contrast, when the QOCV value was low, it means that Li was normally deintercalated from the negative electrode and reversibly intercalated into the positive electrode. Thus, a change in the discharge reversibility of the battery may be estimated from these results.

Referring to FIG. 5, a QOCV value of the secondary battery of Comparative Example 3 was 3.37 V, but QOCV values of the secondary batteries of Examples 1 and 2 were 3.29 V and 3.20 V, respectively, wherein it may be understood that these QOCV values were lower than that of the secondary battery of Comparative Example 3.

That is, since the secondary batteries of the present invention may prevent the trapping of Li ions in the negative electrode even after 200 cycles of charging and discharging, it may be understood that irreversibility of the battery was improved.

**Experimental Example 6. Cycle Characteristics Evaluation**

After a cycle, in which the lithium secondary battery prepared in Example 3 and each of the lithium secondary batteries prepared in Comparative Examples 6 to 8 were charged at 0.1 C to 4.2 V under a CC-CV condition (0.05 C current cut-off) at 25°C and then charged and discharged at 0.33 C in a voltage range of 2.5 V to 4.2 V under a CC-CV condition (0.05 C current cut-off), was repeated 3 times, resistance was measured by applying a current pulse at a CC of 2.5 C for 30 seconds at an SOC of 50%, and, thereafter, each lithium secondary battery was charged at 1.0 C rate to 4.20 V under a constant current-constant voltage (CC-CV) condition at room temperature and discharged at 0.5 C rate under a CC condition to 3.0 V. The above charging and discharging were defined as one cycle, and evaluation of life characteristics was performed at 25°C.

In this case, discharge capacity was measured every cycle, and the measured value was substituted into the following Equation 1 to calculate a capacity retention. The results thereof are presented in FIG. 6 below.

[Equation 1]

$$\text{Capacity retention (\%)} = (\text{discharge capacity every cycle/discharge capacity after initial charge and discharge}) \times 100$$

Referring to FIG. 6, it may be understood that capacity retention (%) after 100 cycles of the secondary battery prepared in Example 3 was better than those of the secondary batteries prepared in Comparative Examples 6 to 8.

Specifically, in a case in which the non-fluorine-based organic solvent was used together and $LiN(FSO_2)_2$ was not included, it may be confirmed that it was difficult to obtain the same level of cycle characteristics as in the example even if other lithium salts, such as $LiPO_2F_2$ and $LiBF_4$, were used.

**Claims**

1. A lithium secondary battery, comprising:

   a positive electrode;
   a negative electrode including a carbon-based material and a silicon-based compound;
   a non-aqueous electrolyte solution containing $LiPF_6$, $LiN(FSO_2)_2$, and a non-aqueous organic solvent; and
   a separator,
   wherein a fluorine-based cyclic carbonate organic solvent and a fluorine-based linear carbonate organic solvent are included as the non-aqueous organic solvent.

2. The lithium secondary battery of claim 1, wherein the carbon-based material comprises at least one selected from crystalline carbon and amorphous carbon.

3. The lithium secondary battery of claim 1, wherein the silicon-based compound comprises at least one selected from silicon (Si), $SiO_x$ (0<x≤2), and a Si-Y alloy, wherein Y is an element selected from the group consisting of alkali metal, alkaline earth metal, a Group 13 element, a Group 14 element excluding Si, transition metal, a rare earth element, and a combination thereof.

4. The lithium secondary battery of claim 1, wherein a weight ratio of the carbon-based material to the silicon-based compound is in a range of 1:1 to 1:10.

5. The lithium secondary battery of claim 1, wherein a molar concentration ratio of the $LiPF_6$ to the $LiN(FSO_2)_2$ is in a range of 1:1 to 1:10.

6. The lithium secondary battery of claim 1, wherein the non-aqueous organic solvent consists of the fluorine-based cyclic carbonate organic solvent and the fluorine-based linear carbonate organic solvent.

7. The lithium secondary battery of claim 1, wherein the fluorine-based cyclic carbonate organic solvent comprises at least one selected from the group consisting of fluoroethylene carbonate (FEC), difluoroethylene carbonate, trifluoroethylene carbonate, tetrafluoroethylene carbonate, 3,3,3-trifluoropropylene carbonate, and 1-fluoropropylene carbonate.

8. The lithium secondary battery of claim 1, wherein the fluorine-based cyclic carbonate organic solvent is fluoroethylene carbonate (FEC).

9. The lithium secondary battery of claim 1, wherein the fluorine-based linear carbonate organic solvent comprises at least one selected from the group consisting of fluoroethyl methyl carbonate (FEMC), fluorodimethyl carbonate, di(2,2,2-trifluoroethyl)carbonate, 2,2,2-trifluoroethyl methyl carbonate, difluoromethyl methyl carbonate, trifluoromethyl methyl carbonate, difluoromethyl ethyl carbonate, 1-fluoroethyl methyl carbonate, and methyl 2,2,2-trifluoroethyl carbonate.

10. The lithium secondary battery of claim 1, wherein the fluorine-based linear carbonate organic solvent is fluoroethyl methyl carbonate (FEMC).

11. The lithium secondary battery of claim 1, wherein the fluorine-based cyclic carbonate organic solvent is fluoroethylene carbonate (FEC), and
Wherein the fluorine-based linear carbonate organic solvent is fluoroethyl methyl carbonate (FEMC).

12. The lithium secondary battery of claim 1, wherein a volume ratio of the fluorine-based cyclic carbonate organic solvent to the fluorine-based linear carbonate organic solvent is in a range of 0.5:9.5 to 4:6.

13. The lithium secondary battery of claim 12, wherein the volume ratio of the fluorine-based cyclic carbonate organic solvent to the fluorine-based linear carbonate organic solvent is in a range of 1:9 to 4:6.

14. The lithium secondary battery of claim 13, wherein the volume ratio of the fluorine-based cyclic carbonate organic solvent to the fluorine-based linear carbonate organic solvent is in a range of 1:9 to 3:7.

**Patentansprüche**

1. Lithium-Sekundärbatterie, umfassend:

eine positive Elektrode;
eine negative Elektrode, die ein Material auf Kohlenstoffbasis und eine Verbindung auf Siliziumbasis enthält;
eine nicht-wässrige Elektrolytlösung, die $LiPF_6$, $LiN(FSO_2)_2$ und ein nicht-wässriges organisches Lösungsmittel enthält; und
einen Separator,
wobei als nicht-wässriges organisches Lösungsmittel ein organisches zyklisches Carbonat-Lösungsmittel auf Fluorbasis und ein organisches lineares Carbonat-Lösungsmittel auf Fluorbasis enthalten sind.

2. Lithium-Sekundärbatterie gemäß Anspruch 1, wobei das Material auf Kohlenstoffbasis mindestens eines umfasst, das ausgewählt ist aus kristallinem Kohlenstoff und amorphem Kohlenstoff.

3. Lithium-Sekundärbatterie gemäß Anspruch 1, wobei die Verbindung auf Siliziumbasis mindestens eine Verbindung umfasst, die ausgewählt ist aus Silizium (Si), $SiO_x$ ($0<x\leq2$) und einer Si-Y-Legierung, wobei Y ein Element ist, das ausgewählt ist aus einer Gruppe bestehend aus einem Alkalimetall, einem Erdalkalimetall, einem Element der Gruppe 13, einem Element der Gruppe 14 mit Ausnahme von Si, einem Übergangsmetall, einem Seltenerdelement und einer Kombination davon.

4. Lithium-Sekundärbatterie gemäß Anspruch 1, wobei das Gewichtsverhältnis zwischen dem Material auf Kohlenstoffbasis und der Verbindung auf Siliziumbasis im Bereich von 1:1 bis 1:10 liegt.

5. Lithium-Sekundärbatterie gemäß Anspruch 1, wobei das molare Konzentrationsverhältnis von $LiPF_6$ zu $LiN(FSO_2)_2$ in einem Bereich von 1:1 bis 1:10 liegt.

6. Lithium-Sekundärbatterie gemäß Anspruch 1, wobei das nicht-wässrige organische Lösungsmittel aus dem organischen zyklischen Carbonat-Lösungsmittel auf Fluorbasis und dem organischen linearen Carbonat-Lösungsmittel auf Fluorbasis besteht.

7. Lithium-Sekundärbatterie gemäß Anspruch 1, wobei das organische zyklische Carbonat-Lösungsmittel auf Fluorbasis mindestens eines umfasst, das ausgewählt ist aus einer Gruppe bestehend aus Fluorethylencarbonat (FEC), Difluorethylencarbonat, Trifluorethylencarbonat, Tetrafluorethylencarbonat, 3,3,3-Trifluorpropylencarbonat und 1-Fluorpropylencarbonat.

8. Lithium-Sekundärbatterie gemäß Anspruch 1, wobei das organische zyklische Carbonat-Lösungsmittel auf Fluorbasis Fluorethylencarbonat (FEC) ist.

9. Lithium-Sekundärbatterie gemäß Anspruch 1, wobei das organische lineare Carbonat-Lösungsmittel auf Fluorbasis mindestens eines umfasst, das ausgewählt ist aus einer Gruppe bestehend aus Fluorethylmethylcarbonat (FEMC), Fluordimethylcarbonat, Di(2,2,2-Trifluorethyl)carbonat, 2,2,2-Trifluorethylmethylcarbonat, Difluormethylmethylcarbonat, Trifluormethylmethylcarbonat, Difluormethylethylcarbonat, 1-Fluorethylmethylcarbonat und 2,2,2-Trifluorethylcarbonat.

10. Lithium-Sekundärbatterie gemäß Anspruch 1, wobei das organische lineare Carbonat-Lösungsmittel auf Fluorbasis Fluorethylmethylcarbonat (FEMC) ist.

11. Lithium-Sekundärbatterie gemäß Anspruch 1, wobei das organische zyklische Carbonat-Lösungsmittel auf Fluorbasis Fluorethylencarbonat (FEC) ist, und
wobei das organische lineare Carbonat-Lösungsmittel auf Fluorbasis Fluorethylmethylcarbonat (FEMC) ist.

12. Lithium-Sekundärbatterie gemäß Anspruch 1, wobei das Volumenverhältnis des organischen zyklischen Carbonat-Lösungsmittels auf Fluorbasis zu dem organischen linearen Carbonat-Lösungsmittel auf Fluorbasis in einem Bereich von 0,5:9,5 bis 4:6 liegt.

13. Lithium-Sekundärbatterie gemäß Anspruch 12, wobei das Volumenverhältnis des organischen zyklischen Carbonat-Lösungsmittels auf Fluorbasis zu dem organischen linearen Carbonat-Lösungsmittel auf Fluorbasis in einem Bereich von 1:9 bis 4:6 liegt.

14. Lithium-Sekundärbatterie gemäß Anspruch 13, wobei das Volumenverhältnis des organischen zyklischen Carbonat-Lösungsmittels auf Fluorbasis zu dem organischen linearen Carbonat-Lösungsmittel auf Fluorbasis in einem Bereich von 1:9 bis 3:7 liegt.

**Revendications**

1. Batterie secondaire au lithium, comprenant :

une électrode positive ;
une électrode négative incluant un matériau carboné et un composé silicé ;
une solution électrolytique non aqueuse contenant du $LiPF_6$, du $LiN(FSO_2)_2$ et un solvant organique non aqueux ; et
un séparateur,
dans laquelle un solvant organique de carbonate cyclique fluoré et un solvant organique de carbonate linéaire fluoré sont inclus en tant que le solvant organique non aqueux.

**2.** Batterie secondaire au lithium selon la revendication 1, dans laquelle le matériau carboné comprend au moins un élément choisi parmi du carbone cristallin et du carbone amorphe.

**3.** Batterie secondaire au lithium selon la revendication 1, dans laquelle le composé silicé comprend au moins un élément choisi parmi le silicium (Si), le $SiO_x$ ($0<x\leq2$) et un alliage Si-Y, dans laquelle Y est un élément choisi dans le groupe consistant en un métal alcalin, un métal alcalino-terreux, un élément du groupe 13, un élément du groupe 14 à l'exclusion du Si, un métal de transition, un élément des terres rares et une combinaison de ceux-ci.

**4.** Batterie secondaire au lithium selon la revendication 1, dans laquelle un rapport en poids du matériau carboné sur le composé silicé est dans une plage de 1:1 à 1:10.

**5.** Batterie secondaire au lithium selon la revendication 1, dans laquelle un rapport de concentration molaire du $LiPF_6$ sur le $LiN(FSO_2)_2$ est dans une plage de 1:1 à 1:10.

**6.** Batterie secondaire au lithium selon la revendication 1, dans laquelle le solvant organique non aqueux consiste en le solvant organique de carbonate cyclique fluoré et le solvant organique de carbonate linéaire fluoré.

**7.** Batterie secondaire au lithium selon la revendication 1, dans laquelle le solvant organique de carbonate cyclique fluoré comprend au moins un élément sélectionné dans le groupe consistant en du fluoroéthylène carbonate (FEC), du difluoroéthylène carbonate, du trifluoroéthylène carbonate, du tétrafluoroéthylène carbonate, du 3,3,3-trifluoropropylène carbonate et du 1-fluoropropylène carbonate.

**8.** Batterie secondaire au lithium selon la revendication 1, dans laquelle le solvant organique de carbonate cyclique fluoré est du fluoroéthylène carbonate (FEC).

**9.** Batterie secondaire au lithium selon la revendication 1, dans laquelle le solvant organique de carbonate linéaire fluoré comprend au moins un élément sélectionné dans le groupe consistant en du fluoroéthyl méthyl carbonate (FEMC), du fluorodiméthyl carbonate, du di(2,2,2-trifluoroéthyl)carbonate, du 2,2,2-trifluoroéthyl méthyl carbonate, du difluorométhyl méthyl carbonate, du trifluorométhyl méthyl carbonate, du difluorométhyl éthyl carbonate, du 1-fluoroéthyl méthyl carbonate et du méthyl 2,2,2-trifluoroéthyl carbonate.

**10.** Batterie secondaire au lithium selon la revendication 1, dans laquelle le solvant organique de carbonate linéaire fluoré est du fluoroéthyl méthyl carbonate (FEMC).

**11.** Batterie secondaire au lithium selon la revendication 1, dans laquelle le solvant organique de carbonate cyclique fluoré est du fluoroéthylène carbonate (EEC), et
dans laquelle le solvant organique de carbonate linéaire fluoré est du fluoroéthyl méthyl carbonate (FEMC).

**12.** Batterie secondaire au lithium selon la revendication 1, dans laquelle un rapport en volume du solvant organique de carbonate cyclique fluoré sur le solvant organique de carbonate linéaire fluoré est dans une plage de 0,5:9,5 à 4:6.

**13.** Batterie secondaire au lithium selon la revendication 12, dans laquelle le rapport en volume du solvant organique de carbonate cyclique fluoré sur le solvant organique de carbonate linéaire fluoré est dans une plage de 1:9 à 4:6.

**14.** Batterie secondaire au lithium selon la revendication 13, dans laquelle le rapport en volume du solvant organique de carbonate cyclique fluoré sur le solvant organique de carbonate linéaire fluoré est dans une plage de 1:9 à 3:7.

[FIG. 1]

25℃ cycle(1.0 C charge/0.5 C discharge, 3.0-4.2 V)

[FIG. 2]

25℃ cycle(1.0 C charge/0.5 C discharge, 3.0-4.2 V)

[FIG. 3]

[FIG. 4]

EP 3 951 991 B1

[FIG. 5]

[FIG. 6]

20

**EP 3 951 991 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190094377